Europäisches Patentamt

European Patent Office

Office européen des brevets

(19)

(11) **EP 1 104 526 B1**

(12) **FASCICULE DE BREVET EUROPEEN**

(45) Date de publication et mention
de la délivrance du brevet:
**14.08.2002 Bulletin 2002/33**

(21) Numéro de dépôt: **00940465.8**

(22) Date de dépôt: **08.06.2000**

(51) Int Cl.⁷: **F16L 11/04**

(86) Numéro de dépôt international:
**PCT/FR00/01578**

(87) Numéro de publication internationale:
**WO 00/77432 (21.12.2000 Gazette 2000/51)**

(54) **TUBE POUR LE TRANSPORT D'ESSENCE**

KRAFTSTOFF- TRANSPORTSCHLAUCH

TUBE FOR GASOLINE TRANSPORT

(84) Etats contractants désignés:
**AT BE CH CY DE DK ES FI FR GB GR IE IT LI LU
MC NL PT SE**

(30) Priorité: **10.06.1999 FR 9907322**

(43) Date de publication de la demande:
**06.06.2001 Bulletin 2001/23**

(73) Titulaire: **Atofina
92800 Puteaux (FR)**

(72) Inventeurs:
• **COURT, François
F-27470 Fontaine l'Abbé (FR)**
• **MERZIGER, Joachim
F-27000 Evreux (FR)**

• **BERTIN, Denis
F-76970 Motteville (FR)**
• **BUSSI, Philippe
F-27300 Bernay (FR)**
• **LEIBLER, Ludwik
F-75016 Paris (FR)**

(74) Mandataire: **Neel, Henry
Atofina,
Départment Propriété Industrielle,
4/8, Cours Michelet
92800 Puteaux (FR)**

(56) Documents cités:
**EP-A- 0 551 094          EP-A- 0 637 509
DE-A- 4 310 159           US-A- 5 500 263
US-A- 5 858 492**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne des tubes pour le transport de fluides agressifs chimiquement ou de solvants et en particulier d'essence et notamment pour amener l'essence du réservoir d'une automobile jusqu'au moteur. US 5858492, US 5500263, et EP 0637509 décrivent de tels tubes.

Pour des raisons de sécurité et de préservation de l'environnement les constructeurs automobiles imposent à ces tubes à la fois des caractéristiques mécaniques comme la résistance et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur.

Parmi les caractéristiques du cahier des charges de ces tubes, cinq sont particulièrement difficiles à obtenir conjointement de façon simple :

- tenue aux chocs à froid (-40°C) selon le test General Motor GM 213 M,
- tenue aux carburants ( le carburant ne doit pas extraire des constituants du tube),
- tenue à température élevée (125°C),
- très faible perméabilité à l'essence,
- une bonne stabilité dimensionnelle du tube en utilisation avec le carburant notamment l'essence.

Dans les tubes de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure ou égale à $10^9$ ohms et de préférence inférieure ou égale à $10^6$ ohms. Il est connu d'abaisser la résistivité superficielle de résines ou matériaux polymériques en leur incorporant des matériaux conducteurs et/ou semi-conducteurs tels que le noir de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charges augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsqu'un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

Il est déjà connu dans l'état de la technique des tubes pour le transport d'essence ayant une structure comportant du Poly(fluorure de vinylidène) (PVDF).

Ainsi EP 0558373 A2 décrit un tube, à base de polyamide, constitué d'une couche extérieure en polyamide et d'une couche intérieure en PVDF liées entre elles par un liant d'adhésion. Grâce à sa couche intérieure en PVDF d'une épaisseur de 250 $\mu$m, ce tube présente une très bonne imperméabilité aux hydrocarbures et à leurs additifs et ne présente pas de phénomène d'extraction de ses constituants par le contact dynamique avec le carburant, le PVDF ne comportant pas de composés extractibles.

Ce tube connu présente cependant une résistance aux chocs insuffisante dans le test GM 213M, test actuel plus sévère que les tests de résistance au choc à - 40°C selon la norme DIN 73378 ou selon la norme DIN 53453.

La demande internationale WO 94/25524 décrit un tube multicouche à base de polyamide et constitué d'une couche extérieure en polyamide, d'une couche intérieure en polymère fluoré, notamment du PVDF, et d'un liant d'adhésion à base d'un polymère A ayant des groupes glutarimide, anhydride glutarique, acide carboxylique, et ester carboxylique.

La demande internationale WO 95/11947 décrit un tube à essence comprenant une couche intérieure de PVDF, une couche extérieure de polyamide et une couche de liant d'adhésion à base d'un polymère A comportant des groupes anhydride glutarique, acide carboxylique et ester carboxylique.

Le brevet européen 0637511 B décrit un composite thermoplastique multicouche, contenant :

I. au moins une couche à base d'un mélange à mouler constitué de polyamide, et
II. au moins une couche voisine de la couche I, à base d'un mélange à mouler constitué d'un mélange :

a) de poly(fluorure de vinylidène), et
b) de polyglutarimide,

les couches étant liées l'une à l'autre par une liaison dynamique.

Cependant il est prévu que pour augmenter la résistance au choc à froid, les polyglutarimides peuvent encore contenir des modifiants chocs, par exemple des polymères coeur / écorce ayant un coeur en poly(acrylate de butyle) et une écorce en poly(méthacrylate de méthyle) et/ou en polyglutarimide. Ce brevet ne décrit pas le comportement de résistance aux chocs de ces structures, en particulier dans le test GM 213M.

Par ailleurs H. RIES dans " MULTILAYER-PLASTICS FUEL LINES, Kunststoffe 85 (1995)11, pp. 1933-1936", énonce que le meilleur effet barrière est obtenu quand l'essence est en contact direct avec la couche barrière (en PVDF), mais que de tels tubes ne sont pas utilisés car ils n'ont pas la résistance aux chocs à basses températures du PA12.

Un premier but de la présente invention est d'obtenir un tube destiné à transporter des fluides agressifs chimiquement ou des solvants et en particulier de l'essence et ses additifs, et devant résister au test chocs GM 213M tout en ayant une excellente propriété barrière à ces fluides ou solvants.

La Demanderesse a constaté qu'à la date de la présente demande de brevet, il n'existait pas de structure de tube qui soit résistante au test GM 213M et dont la couche interne, destinée à être en contact avec des fluides agressifs chimiquement ou des solvants et en particulier avec de l'essence, soit à base d'un polymère fluoré.

Un second but de la présente invention est d'obtenir un tube ayant les mêmes propriétés que celui ci-dessus à l'exception du fait que sa couche intérieure destinée à entrer en contact avec l'essence est électroconductrice.

Le premier but est obtenu par un tube ayant dans sa direction radiale, de l'intérieur vers l'extérieur, une couche dite intérieure, à base d'une résine (ou polymère) fluorée et destinée à entrer en contact avec un fluide circulant, caractérisé en ce que la couche intérieure est formée d'un mélange comportant une résine fluorée thermoplastique semi-cristalline et un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et en ce que :

- le bloc A est compatible avec la résine fluorée,
- le bloc B est incompatible avec la résine fluorée et est incompatible avec le bloc A,
- le bloc C est incompatible avec la résine fluorée, le bloc A et le bloc B.

Le tube ainsi obtenu résiste au test chocs GM 213M tout en ayant d'excellente propriété barrière à l'essence et à ses additifs.

Avantageusement, le tube est dicouche et comporte une couche extérieure en polyamide ou en un mélange de polyamide et de polyoléfine à matrice polyamide, la couche intérieure et la couche en polyamide ou à matrice polyamide étant solidaires.

Avantageusement, le tube est dicouche et comporte une couche extérieure en polyamide ou en un mélange de polyamide et de polyoléfine à matrice polyamide, la couche intérieure et la couche en polyamide ou à matrice polyamide étant rendues solidaires par l'ajout d'un composé acrylique fonctionnel au mélange de la couche intérieure.

En général, le tube est tricouche et comporte une couche extérieure en polyamide ou en un mélange de polyamide et de polyoléfine à matrice polyamide, la couche intérieure et la couche en polyamide ou à matrice polyamide étant rendues solidaires par un liant d'adhésion disposé entre elles.

De préférence, le tube est multicouche et comporte une couche en polyamide ou en un mélange de polyamide et de polyoléfine à matrice polyamide, la couche intérieure et la couche en polyamide ou à matrice polyamide étant rendues solidaires par une succession de couches intermédiaires qui, chacune, est solidaire de ses couches adjacentes.

Le second but de la présente invention est atteint par un tel tube qui se caractérise en ce que le mélange de la couche intérieure contient une charge dispersée de noir de carbone électroconducteur en une quantité suffisante pour conférer à cette couche intérieure une conductivité surfacique inférieure ou égale à $10^9$ Ω et de préférence inférieure ou égale à $10^6$ Ω.

De préférence, la couche qui suit dans une direction radiale du tube, de l'intérieur vers l'extérieur, la couche intérieure chargée de noir de carbone, est de même nature polymèrique mais ne contient pas de charge électroconductrice ou de quantité électriquement significative de noir de carbone. Par quantité électriquement significative, on entend une quantité telle qu'elle produit une résistivité surfacique sur tube inférieure ou égale à $10^9$ Ω.

L'expression ci-dessus : "même nature polymèrique" signifie qu'il s'agit de polymère fluoré semi-cristallin majoritaire en poids, ce polymère pouvant également être mélangé à un tribloc ABC et même être de composition identique à la composition de la couche intérieure, sans contenir toutefois de quantité significative de noir de carbone.

Les tubes électroconducteurs ainsi obtenus résistent au test chocs GM 213M tout en conservant d'excellentes propriétés barrières à l'essence et à ses additifs et ne présentent pas d'extractibles.

Le bloc A d'un copolymère ABC est considéré comme compatible avec la résine fluorée si le polymère A identique à ce bloc (donc sans séquences B et C) est compatible avec cette résine à l'état fondu. De même, les blocs A et B sont considérés comme compatibles si les polymères A et B identiques à ces blocs sont compatibles. D'une manière générale, par compatibilité entre deux polymères, on entend l'aptitude de l'un à se dissoudre dans l'autre à l'état fondu ou bien leur miscibilité totale.

Dans le cas contraire les polymères ou blocs sont dits incompatibles.

Plus l'enthalpie de mélange de deux polymères est faible, plus grande est leur compatibilité. Dans certains cas, il y a une interaction spécifique favorable entre les monomères qui se traduit par une enthalpie de mélange négative pour les polymères correspondants. Dans le cadre de la présente invention, on préfère mettre en oeuvre des polymères compatibles dont l'enthalpie de mélange est négative ou nulle.

L'enthalpie de mélange ne peut cependant pas être mesurée de manière classique pour tous les polymères, et donc la compatibilité ne peut qu'être déterminée de manière indirecte, par exemple par des mesures d'analyse viscoélastique en torsion ou en oscillation ou encore par analyse calorimétrique différentielle.

Pour des polymères compatibles, on peut détecter 2 Tg pour le mélange : l'une au moins des deux Tg est différente des Tg des composés purs et se situe dans la plage de températures comprise entre les deux Tg des composés purs. Le mélange de deux polymères totalement miscibles présente une seule Tg.

D'autres méthodes expérimentales peuvent être utilisées pour mettre en évidence la compatibilité des polymères, telles que mesures de turbidité, mesures de diffusion de la lumière, mesures infrarouge (L. A Utracki, Polymer Alloys and Blends, pp 64-117).

Des polymères miscibles ou compatibles sont répertoriés dans la littérature, voir par exemple J. Brandrup and E.H. Immergut: Polymer Handbook, 3rd Edition, Wiley & Sons 1979, New York 1989, pp. VI/348 à VI/364 ; O. Olabisi, L. M. Robeson and M. T. Shaw : Polymer Miscibility, Academic Press, New York 1979, pp. 215-276 ; L.A. Utracki : Polymer Alloys and Blends, Hanser Verlag, Münich 1989. Les listes figurant dans ces références sont données à titre illustratif et ne sont, bien entendu, pas exhaustives.

Avantageusement, la résine fluorée est choisie parmi :

- les homo- et copolymères de fluorure de vinylidène (VF2) contenant de préférence au moins 50 % en poids de VF2 et au moins un autre monomère fluoré tel que le chlorotrifluoroéthylène (CTFE), l'hexafluoropropylène (HFP), le trifluoroéthylène (VF3), le tétrafluoroéthylène (TFE),
- les homo- et copolymères de trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

De préférence, la résine fluorée est du Poly(fluorure de vinylidène) (PVDF).

Avantageusement, le PVDF a une viscosité allant de 100 Pa.s à 2000 Pa.s, la viscosité étant mesurée à 230°C, à un gradient de cisaillement de 100 s$^{-1}$ à l'aide d'un rhéomètre capillaire. En effet, ces PVDF sont particulièrement bien adaptés à la coextrusion en mélange avec les triblocs ABC.

De préférence, le PVDF a une viscosité allant de 300 Pa.s à 1200 Pa.s, la viscosité étant mesurée à 230°C, à un gradient de cisaillement de 100 s$^{-1}$ à l'aide d'un rhéomètre capillaire.

Ainsi, le PVDF commercialisé sous la marque KYNAR® 710 de viscosité allant de 400 à 500 Pa.s est très adapté à la coextrusion lorsqu'il est mélangé aux triblocs ABC. Cette viscosité est mesurée de la même manière que précédemment.

Le copolymère à blocs comportant au moins trois blocs A, B et C est tel que le bloc A est relié au bloc B et le bloc B au bloc C au moyen d'une ou plusieurs liaisons simples covalentes. Dans le cas de plusieurs liaisons covalentes, entre le bloc A et le bloc B et/ou entre le bloc B et le bloc C, il peut y avoir un seul motif ou un enchaînement de motifs servant à joindre les blocs entre eux. Dans le cas d'un seul motif, ce dernier peut provenir d'un monomère dit modérateur utilisé dans la synthèse du tribloc. Dans le cas d'un enchaînement de motifs, celui-ci peut être un oligomère résultant d'un enchaînement d'unités monomères d'au moins deux monomères différents dans un ordre alterné ou aléatoire. Un tel oligomère peut relier le bloc A au bloc B et le même oligomère ou un oligomère différent peut relier le bloc B au bloc C.

De préférence, le bloc B a une température de transition vitreuse $Tg_{(B)}$, mesurée par analyse thermique différentielle, allant de -100°C à -50°C. En effet, le bloc B étant alors de nature thermoplastique du fait de l'existence d'une température de transition vitreuse, cette basse $Tg_{(B)}$ confère au bloc B des propriétés élastomériques à -40°C, température du test chocs GM 213 M.

Avantageusement, le bloc B est choisi parmi les poly(diènes) notamment poly(butadiène), poly(isoprène) et leurs copolymères statistiques, ou encore parmi les poly(diènes) notamment poly(butadiène), poly(isoprène) et leurs copolymères statistiques, partiellement ou totalement hydrogénés.

De préférence, le bloc B est un bloc polybutadiène ayant une température de transition vitreuse $Tg_{(B)}$, mesurée par analyse thermique différentielle, allant de -100°C à -50°C.

De préférence, le bloc C a une température de transition vitreuse $Tg_{(C)}$ ou une température de fusion $Tf_{(C)}$ supérieure à la $Tg_{(B)}$ ou bloc B.

Cette caractéristique confère la possibilité que le bloc C soit à l'état vitreux soit dans un état partiellement cristallin et le bloc B à l'état élastomérique, pour une même température d'utilisation Tp.

D'après la présente invention, il est possible de choisir la nature des blocs B pour avoir une certaine $Tg_{(B)}$ déterminée et ainsi, à la température d'utilisation Tp du matériau ou de l'objet formé à partir du mélange, d'avoir un état élastomérique ou souple de ces polymères blocs B. Par contre, les polymères blocs C pouvant avoir une $Tg_{(C)}$ ou une Tf supérieure à la $Tg_{(B)}$, ils peuvent être dans un état vitreux relativement rigide à la même température d'utilisation.

Comme les blocs C sont incompatibles avec la ou les résines thermoplastiques, les blocs A et les blocs B, ils forment une phase discrète rigide à l'intérieur du matériau en formant des nanodomaines inclus dans le matériau et servant d'ancrages dans la zone d'une des extrémités de chaque bloc B. L'autre extrémité de chaque bloc B est relié à un bloc A qui possède une forte affinité avec la ou les résines thermoplastiques semi-cristallines. Cette forte affinité procure un second ancrage dans la zone de la seconde extrémité du bloc B.

Avantageusement, le bloc A est choisi parmi les homo- et copolymères d'(alkyl)acrylate d'alkyle et par exemple de méthacrylate de méthyle (MAM) et/ou d'acrylate de méthyle ou d'éthyle et/ou celles dérivant d'acétate de vinyle.

Avantageusement, le bloc A est du Poly(méthacrylate de méthyle) (PMMA).

De préférence, ce PMMA est syndiotactique et sa température de transition vitreuse $Tg_{(A)}$, mesurée par analyse thermique différentielle, est de +120°C à + 140°C.

Les triblocs qui contiennent des séquences dérivant d'(alkyl)acrylate d'alkyle peuvent notamment être préparés par polymérisation anionique par exemple selon les procédés décrits dans les demandes de brevet EP 524.054 et EP 749.987.

Avantageusement, le bloc C est choisi parmi les homopolymères ou les copolymères du styrène ou de l'α-méthylstyrène.

De préférence, le tribloc ABC est du Poly (méthyle méthacrylate-*b*-butadiène-*b*-styrène).

Avantageusement, le mélange de la résine fluorée thermoplastique semi-cristalline et du copolymère tribloc ABC avec éventuellement les produits secondaires de sa synthèse, contient en poids au moins 50 % et de préférence de 70 à 97 % de résine(s) fluorée(s) thermoplastique(s) semi-cristalline(s) et le complément (à 100 %) en poids du copolymère tribloc de masse moléculaire moyenne en nombre ($M_n$) supérieure ou égale à 20000 g.mol$^{-1}$, et de préférence comprise entre 50000 et 200000 g.mol$^{-1}$, avec éventuellement ses produits secondaires, constitué de :

- 20 à 93 et de préférence de 30 à 70 parties en poids de séquences A,
- 5 à 68 et de préférence de 10 à 40 parties en poids de séquences B,
- 2 à 65 et de préférence de 5 à 40 parties en poids de séquences C,

les pourcentages étant calculés par rapport au poids total de résine(s) fluorées(s) avec le copolymère à blocs et éventuellement ses produits secondaires, sans tenir compte dans ces pourcentages de la présence éventuelle d'autres additifs.

Avantageusement, le mélange de la résine fluorée thermoplastique semi-cristalline et du copolymère tribloc ABC a une viscosité à 230°C, pour un gradient de 100 s$^{-1}$ allant de 200 Pa.s à 4000 Pa.s. De préférence cette viscosité va de 300 Pa.s à 2000 Pa.s.

Avantageusement, le mélange se caractérise en ce qu'il comprend du poly(difluorure de vinylidène) (PVDF) en tant que résine fluorée thermoplastique et un copolymère tribloc poly(méthacrylate de méthyle)-poly(butadiène)-poly(styrène).

La demanderesse a constaté de manière surprenante que dans le cas des triblocs, les produits secondaires issus de la synthèse, tels que les diblocs ou les homopolymères, n'étaient pas préjudiciables aux propriétés mécaniques du mélange selon la présente invention à la différence des compositions de l'art antérieur à base de dibloc et de PVDF. Pour ces dernières compositions connues, la présence de ces homopolymères est particulièrement néfaste pour les propriétés du matériau et nécessite donc impérativement une purification coûteuse.

Ainsi le mélange selon l'invention comportant un copolymère tribloc ABC peut contenir, comme produits secondaires de sa synthèse, un copolymère dibloc B-C et éventuellement de l'homopolymère C.

De même, le mélange selon l'invention comportant un copolymère tribloc ABC peut contenir, comme produits secondaires de sa synthèse, un copolymère dibloc A-B et éventuellement de l'homopolymère A.

En effet, la synthèse d'un copolymère tribloc se fait préférentiellement en réunissant successivement le bloc A au bloc B puis au bloc C ou inversement le bloc C au bloc B puis au bloc A suivant la nature des trois blocs A, B et C. Le bloc A étant par définition celui qui est compatible avec la résine fluorée semi-cristalline.

Le mélange peut aussi contenir des copolymères blocs linéaires symétriques ou en étoiles du type ABA ou CBC.

Avantageusement, pour 100 grammes d'un mélange de polymère fluoré et de copolymères tribloc ABC, contenant 100-x grammes de polymère fluoré et x grammes de copolymères tribloc ABC, la quantité totale en poids de ces homopolymères A, C ou copolymères blocs AB, BC, ABA et CBC est inférieure à 3 fois la quantité x de triblocs ABC contenu dans le mélange.

Les mélanges selon l'invention peuvent également contenir divers additifs et/ou charges et/ou colorants et/ou pigments, organiques ou minéraux, macromoléculaires ou non, bien connus dans la littérature.

A titre d'exemples non limitatifs de charges insolubles dans ces mélanges, on peut citer le mica, l'alumine, le talc, le dioxyde de titane, le noir de carbone, notamment le noir de carbone électroconducteur, les fibres de verre, de carbone, des composés macromoléculaires.

A titre d'exemples non limitatifs d'additifs, on peut citer les agents anti-U.V., les agents ignifugeants, les agents de transformation ("processing aids").

La somme de ces additifs et charges diverses représente en général moins de 20 % de la masse totale du mélange de résine fluorée thermoplastique avec le tribloc ABC et ses homopolymères et / ou copolymères apparentés évoqués ci-dessus.

Par polyamide au sens de la présente invention, on entend les polyamides ou PA qui contiennent des motifs aliphatiques et/ou cycloaliphatiques et/ou aromatiques.

On peut citer les polyamides obtenus par polycondensation d'un ou plusieurs lactames, d'$\alpha,\omega$-aminoacides préférés sont les acides 10-aminodécanoïque, 11-aminoundécanoïque, 12-aminododécanoïque.

Les diamines aliphatiques sont des $\alpha,\omega$-diamines contenant entre les groupes amino terminaux au moins 6 atomes de carbone, de préférence de 6 à 10. La chaîne carbonée peut être linéaire (polyméthylènediamine) ou ramifiée ou encore cycloaliphatique. Des diamines préférées sont l'hexaméthylènediamine (HMDA), la dodécaméthylènediamine, la décaméthylènediamine.

Les diacides carboxyliques peuvent être aliphatiques, cycloaliphatiques ou aromatiques. Les diacides carboxyliques aliphatiques sont des $\alpha,\omega$-diacides carboxyliques possédant au moins 4 atomes de carbone (non compris les atomes de carbone des groupes carboxyliques), de préférence au moins 6, dans la chaîne carbonée linéaire ou ramifiée. Les diacides sont les acides azélaïque, sébacique et 1,12-dodécanoïque. A titre d'illustration de tels PA, on peut mentionner :

le polyhexaméthylènesébacamide (PA-6,10),
le polyhexaméthylènedodécanediamide (PA-6,12),
le poly(undécanoamide) (PA-11),
le poly(laurolactame (2-Azacyclotridécanone) (PA-12),
le polydodécaméthylènedodécanediamide (PA-12,12),
le polycapronamide (PA-6),
le polyhexaméthylèneadipamide (PA-6,6).

Les PA ont une masse moléculaire moyenne en nombre Mn en général supérieure ou égale à 5000. Leur viscosité inhérente (mesurée à 20°C pour un échantillon de 0,5 g dans 100 g de méta-crésol) est en général supérieure à 0,7.

Avantageusement, on utilise le polyamide 11 ou le polyamide 12. Avantageusement, le polyamide de la couche extérieure est plastifié par des plastifiants usuels tels que le n-butyl benzène sulfonamide (BBSA) et les polymères comprenant des blocs polyamides et des blocs polyéthers. Ces polymères à blocs résultent de la condensation de blocs polyamides à extrémités carboxyliques avec, soit des polyétherdiols, soit des polyétherdiamines, soit un mélange de ces polyéthers. Cette couche extérieure peut contenir aussi des additifs anti-oxydants et des charges usuelles telles que du noir de carbone. D'une manière générale, les plastifiants du type blocs polyamides et blocs polyéthers pouvant être ajoutés dans la couche extérieure sont ceux décrits dans la demande de brevet FR 94 14521.

On entend par matrice polyamide les produits de condensation :

- d'un ou plusieurs aminoacides, tels les acides aminocaproïque, amino-7-heptanoïque, amino-11-undécanoïque et amino-12-dodécanoïque d'un ou plusieurs lactames tels que caprolactame, oenantholactame et laurolactame ;
- d'un ou plusieurs sels ou mélanges de diamines telles l'hexaméthylène-diamine, la dodécaméthylènediamine, la métaxylyènediamine, le bis-p-aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de tous ces monomères ce qui conduit à des copolyamides.

On peut utiliser des mélanges de polyamide. On utilise avantageusement le PA-6 et le PA-6,6 et le PA 12.

On entend par polyoléfines des polymères comprenant des motifs oléfines tels que par exemple des motifs éthylène, propylène, butène-1, et leurs homologues supérieurs.

A titre d'exemple, on peut citer :

- le polyéthylène, le polypropylène, les copolymères de l'éthylène avec des α-oléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters (ii) les esters vinyliques d'acides carboxyliques saturés, (iii) les acides dicarboxyliques insaturés, leurs sels, leurs esters, leurs hémiesters, leurs anhydrides (iv) les époxydes insaturés.
  Ces copolymères de l'éthylène pouvant être greffés par des anhydrides d'acides dicarboxyliques insaturés ou des époxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement :

- le polyéthylène,
- le propylène,
- les copolymères de l'éthylène et d'une α-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé.

Il est recommandé pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :

- le polyéthylène, le polypropylène, les copolymères éthylène propylène, copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé,
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyamide formant la matrice dans la couche intérieure peut être comprise entre 50 et 95 parties pour 5 à 50 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères de la couche intérieure par mélange de polyamide, de polyoléfine et éventuellement de compatibilisant selon les techniques usuelles de mélange à l'état fondu (bi vis, Buss, monovis).

Avantageusement, la couche contenant du polyamide forme une matrice de polyamide 6 (PA-6) ou 66 (PA-6,6) dans laquelle sont dispersés, soit des nodules d'un mélange de polyéthylène basse densité et de copolymère d'éthylène de (méth)acrylate d'alkyl et d'anhydride maléique ou de méthacrylate de glycidyle, soit des nodules de polypropylène.

De tels produits sont décrits dans les brevets US 5070145 et EP 564 338.

Dans le cas du polypropylène, on ajoute un compatibilisant qui est avantageusement un copolymère éthylène / propylène majoritaire en nombre de motifs propylène, greffé par l'anhydride maléique, puis condensé ensuite avec des oligomères mono aminés de caprolactame.

La couche de liant permet une bonne adhésion entre la couche en polyamide ou la couche de mélange de polyamide et de polyoléfine à matrice polyamide et la couche intérieure mélange de polymère fluoré et de tribloc ABC éventuellement chargé de noir de carbone électroconducteur.

A titre d'exemple de liant, on peut citer :

un liant tel que décrit dans la demande brevet EP 0816460 A1.

Le liant peut être choisi parmi les polymères greffés énoncés ci-dessus et dont certains sont commercialisés par la société ELF ATOCHEM S.A. sous la marque OREVAC®.

Le mélange PA, PE à matrice PA peut être choisi parmi les produits commercialisés par la société ELF ATOCHEM S.A. sous la marque ORGALLOY®.

Ainsi, à titre d'exemple on peut produire un tube selon la présente invention ayant la structure suivante :

PA / liant / polymère fluoré + tribloc ABC avec éventuellement ses produits secondaires de synthèse.

Avantageusement, la couche intérieure chargée de noir de carbone électroconducteur a une épaisseur allant de 25 à 400 μm et de préférence de 75 à 200 μm.

La couche suivante en direction de l'extérieur et ne contenant pas de noir de carbone électroconducteur ou en contenant une quantité non électriquement significative, a en général une épaisseur d'au moins 50 μm et de préférence de 50 à 500 μm.

La couche de liant a une épaisseur en général d'au moins 10 μm et de préférence de 25 à 100 μm.

La ou les couches suivantes vers l'extérieure ont une épaisseur totale en général d'au moins 300 μm et de préférence de 400 à 800 μm.

De préférence, le tube selon la présente invention se caractérise par un diamètre extérieur allant de 6 à 12 mm, une épaisseur totale de 0,495 mm à 1,90 mm,

une épaisseur de 25 à 300 μm pour la couche intérieure chargée de C électroconducteur,

une épaisseur de 50 à 500 μm pour la couche intermédiaire,

une épaisseur de 20 à 100 μm pour la couche de liant,

une épaisseur de 400 à 800 μm pour la couche extérieure ou les autres couches.

Ces tubes multicouches peuvent être cylindriques de diamètre externe constant, ou annelés.

Les tubes de diamètre externe constant peuvent être fabriqués de manière classique par coextrusion.

De manière classique, ces tubes peuvent comporter des gaines de protection notamment en caoutchouc pour les protéger des points chauds du moteur.

Quant aux tubes utilisés dans les stations-service, le diamètre extérieur est en général de 20 à 120 mm et leur épaisseur de 0,8 à 14 mm. Les épaisseurs de liant et de couche intérieure restent identiques à celles citées ci-dessus. Les tubes peuvent être renforcés par toutes les méthodes usuelles.

La présente invention sera mieux comprise à l'aide de la partie expérimentale suivante donnée à titre seulement illustratif de la présente invention.

**Partie expérimentale :**

Produits utilisés :

- PVDF

Les produits commerciaux (ELF ATOCHEM) vendus sous la marque KYNAR® sont des homopolymères ou copolymères à base de VF2.

Le KYNAR®710 est un homopolymère PVDF disponible sous forme de granulés ; sa température de fusion est de 170°C et sa viscosité mesurée avec un rhéomètre capillaire à 230°C et 100 s$^{-1}$ est comprise entre 400 et 700 Pa.s.

Le KYNAR®720 est un homopolymère PVDF disponible sous forme de granulés ; sa température de fusion est de 170°C et sa viscosité mesurée avec un rhéomètre capillaire à 230°C et 100 s$^{-1}$ est comprise entre 750 et 1050 Pa.s.

Le KYNAR®740 est un homopolymère PVDF disponible sous forme de granulés ; sa température de fusion est de 170°C et sa viscosité mesurée avec un rhéomètre capillaire à 230°C et 100 s$^{-1}$ est comprise entre 1500 et 2250 Pa.s.

- Plastifiant du PVDF : Di-butyl sébaçate

- PA

PA12: Le Polyamide utilisé est un polyamide 12 commercial d'Elf Atochem, référencé MA4411. Ce produit est constitué de :

- 85% de polyamide 12 ayant une viscosité inhérente de 1.65,
- 7% de n-butylbenzène sulfonamide (BBSA) qui est un plastifiant,
- 6% d'élastomère thermoplastique à base de polyétherblocamide de dureté Shore D égale à 55 et de point de fusion 159°C,
- 2% d'additifs (colorants noirs, lubrifiants, stabilisants).

- Additif choc : EXL3600 est un additif choc de type MBS, de structure coeur/écorce et est commercialisé par la société Rohm et Haas. Il est à base de méthacrylate de méthyle de butadiène et de styrène.

- Liant :

Le produit utilisé, désigné Liant1, est un liant à base de KYNAR®720 contenant notamment des additifs MBS et d'autres additifs comme ceux décrits dans les brevets ELF ATOCHEM (brevet WO 94/25524 et WO 95/11947) :

- 50% de PVDF KYNAR® 720,
- 35% de EXL3600,
- 15% d'acrylique fonctionnel, qui est un copolymère de MMA et de moins de 5% d'acide méthacrylique et d'anhydride glutarimique.

Ce liant permet d'assurer une excellente adhésion entre une couche de polyamide et une couche de PVDF.

- Noir de Carbone :

Commercialisé par la société M.M.M sous la dénomination « Ensaco 250Granular » et caractérisé par une absorption DBP d'environ 190 ml/g et par une surface BET d'environ 35m$^2$/g.

- Tribloc :

Un tribloc désigné par PMMA-PB-PS correspond à un terpolymère tribloc Poly (méthyle méthacrylate-*b*-butadiène-*b*-styrène).

Exemple 1

Un tribloc PMMA-PB-PS, référencé ABC1 (58-20-22) a les caractéristiques suivantes: la masse moléculaire en nombre (Mn) des séquences PMMA est de 65700 g.mol-1, la Mn des séquences PB est 22800 et celle des blocs PS est de 25000. Le bloc PMMA représente 58% en fraction massique de la masse totale du tribloc, le bloc PB représente 20% en fraction massique de la masse totale du tribloc, et le bloc PS représente les 22% restants. Il est préparé selon le mode opératoire décrit dans EP 524.054 ou dans EP 749.987.

Le produit obtenu, ABC1* contient en plus du tribloc ABC1 une certaine quantité de dibloc BC1 qui est un intermédiaire de synthèse, le dibloc BC1 a un bloc PS de Mn 25000 et un bloc PB de Mn 22800. La composition du produit ABC1* est de 60% en masse de tribloc ABC1 et de 40% en masse de dibloc BC1. Lors de la synthèse du tribloc ABC1, une certaine quantité de dibloc BC1 est prélevée en cours de synthèse afin d'être utilisée dans certains exemples de formulations.

Mise en oeuvre des mélanges :

Les granulés de PVDF et les granulés du produit ABC1* sont mélangés à sec et introduits dans une machine de mélange de type comalaxeur à l'état fondu de marque BUSS, dont le diamètre de la vis malaxante est de 46 mm.

La température de transformation est de 230°C avec un débit matière de 15kg/heure.

Différentes formulations de mélanges de PVDF avec un tribloc ou avec d'autres additifs sont réalisées selon ce protocole, pour la liste complète se reporter au tableau I.

Tableau I

| Compositions réalisées | | | | |
|---|---|---|---|---|
| Référence | PVDF | Additif | Composition en fraction massique | Viscosité à 230°C (Pa.s) |
| Témoin1 | KYNAR®710 | Tribloc ABC1* | 100/0 | 400-500 |
| Formulation-1 | KYNAR®710 | Tribloc ABC1* | 85 / 15 | 700-800 |
| Formulation2 | KYNAR®710 | Tribloc ABC1* | 75 / 25 | 900-1000 |
| Témoin2 | KYNAR®710 | dibloc BC1 | 75 / 25 | 700-800 |
| Témoin3 | KYNAR®720 | Tribloc ABC1* | 100 / 0 | 800-900 |
| Formulation3 | KYNAR®720 | Tribloc ABC1* | 85 / 15 | 1000-1100 |
| Formulation4 | KYNAR®720 | Tribloc ABC1* | 75 / 25 | 1100-1200 |
| Témoin4 | KYNAR®720 | CS | 75 / 25 | 1100-1200 |
| Témoin5 | KYNAR®720 | Plastifiant/CS | 75 / 5 / 20 | 900-1000 |
| Témoin6 | KYNAR®740 | Tribloc ABC1* | 100 / 0 | 1800-1900 |
| Formulation5 | KYNAR®740 | Tribloc ABC1 * | 85 / 15 | 1900-2000 |
| Formulation6 | KYNAR®740 | Tribloc ABC1* | 75 / 25 | 2000-2100 |
| CS : Coeur/écorce (Core shell) commercial EXL 3600, utilisé comme additif choc Plastifiant : Di Butyl sébaçate | | | | |

Mise en oeuvre des tubes :

Les granulés issus du compoundage sont mis en oeuvre sur une machine classique de coextrusion à une température de 230°C pour réaliser des tubes tricouches. Cette technologie est décrite dans de nombreux ouvrages (par exemple: «plastics extrusion technology », Editeur F. HENSEN, 1988, 738 pages, ISBN : 0-19-520760-2).

La couche extérieure est constituée de PA12 MA4411, dont la composition a été décrite précédemment, elle a une épaisseur de 750µm.

La couche intermédiaire est constituée de liant à base de PVDF désigné liant1, dont la composition a été décrite précédemment, elle a une épaisseur de 50µm.

La couche interne (couche en contact avec l'essence) est constituée des fomulations décrites dans le tableau I, elle a une épaisseur de 200µm.

La vitesse de tirage est de 15m/min.

Les caractéristiques des différents tubes réalisés sont rappelées dans le tableau II.

Tableau II

| Tubes tricouches réalisés, diamètre extérieur 8 mm, épaisseur 1 mm. | | | |
|---|---|---|---|
| Structure | Epaisseurs des couches (µm) | Coextrusion*Vit. tirage en m / min | Résultats Choc GM213M** à -40°C |
| PA12/Liant1 / Témoin1 | 750 / 50 / 200 | 15 | 10/10 |
| PA12 / Liant1 / Formulation1 | 750 / 50 / 200 | 15 | 0/10 |

*: lorsque la coextrusion peut être réalisée dans les conditions industrielles (à une vitesse de tirage de 15m/min), le tube obtenu est de bonne qualité. En revanche, lorsque la formulation est trop visqueuse (>1500Pa.s), on est obligé de diminuer la vitesse de tirage, le tube obtenu n'a pas des caractéristiques dimensionnelles satisfaisantes.

** : les résultats de choc GM sont exprimés en nombre de tubes cassés ou fendus pour dix tubes impactés. La norme prévoit qu'une structure passe le choc GM213M s'il n'y a aucune casse ou fissure pour dix tubes impactés (0/10), sinon la structure n'est pas considérée satisfaisante. Il est important de noter qu'une fissure fine peut ne pas être détectée à l'oeil. La norme prévoit que la pression d'éclatement du tube soit mesurée avant et après le test de choc. Pour qu'un tube passe le test il est nécessaire que la pression d'éclatement après le choc soit au moins égale à 80% de la valeur de la pression d'éclatement mesurée sur le tube avant le test de choc.

Tableau II   (suite)

| Tubes tricouches réalisés, diamètre extérieur 8 mm, épaisseur 1 mm. | | | |
|---|---|---|---|
| Structure | Epaisseurs des couches (µm) | Coextrusion*Vit. tirage en m / min | Résultats Choc GM213M** à -40°C |
| PA12 / Liant1 / Formulation2 | 750 / 50 / 200 | 15 | 0/10 |
| PA12 / Liant1 / Témoin2 | 750 / 50 / 200 | 15 | 10/10 |
| PA12 / Liant1 / Témoin3 | 750 / 50 / 200 | 15 | 10/10 |
| PA12 / Liant1 / Formulation3 | 750/50/200 | 15 | 0/10 |
| PA12 / Liant1 / Formulation4 | 750 / 50 / 200 | 15 | 0/10 |
| PA12 / Liant1 / Témoin4 | 750 / 50 / 200 | 15 | 8/10 |
| PA12 / Liant1 / Témoin5 | 750/50/200 | 15 | 6/10 |
| PA12 / Liant1 / PA12 | 750 / 50 / 200 | 15 | 0/10 |
| PA12 / Liant1 / Témoin6 | 750 / 50 / 200 | 10 | N.E. |
| PA12 / Liant1 / Formulation5 | 750 / 50/ 200 | 10 | N.E. |
| PA12 / Liant1 / Formulation6 | 750 / 50 / 200 | 7 | N.E. |
| N.E. signifie non effectué. | | | |

*: lorsque la coextrusion peut être réalisée dans les conditions industrielles (à une vitesse de tirage de 15m/min), le tube obtenu est de bonne qualité. En revanche, lorsque la formulation est trop visqueuse (>1500Pa.s), on est obligé de diminuer la vitesse de tirage, le tube obtenu n'a pas des caractéristiques dimensionnelles satisfaisantes.

** : les résultats de choc GM sont exprimés en nombre de tubes cassés ou fendus pour dix tubes impactés. La norme prévoit qu'une structure passe le choc GM213M s'il n'y a aucune casse ou fissure pour dix tubes impactés (0/10), sinon la structure n'est pas considérée satisfaisante. Il est important de noter qu'une fissure fine peut ne pas être détectée à l'oeil. La norme prévoit que la pression d'éclatement du tube soit mesurée avant et après le test de choc. Pour qu'un tube passe le test il est nécessaire que la pression d'éclatement après le choc soit au moins égale à 80% de la valeur de la pression d'éclatement mesurée sur le tube avant le test de choc.


Tableau III

| Perméabilité statique à l'essence M15 à 60°C réalisée sur films de 200µm d'épaisseur (l'essence M15 est composée de 15% de Méthanol, 42.5% de Toluène et de 42.5% d'Isooctane) | | |
|---|---|---|
| Film N° | Mélange de Polymères ou polymère témoin | Perméabilité en g / m$^2$.24 heures mesurée puis calculée pour une épaisseur du film ramenée à 1 mm |
| 1 | KYNAR®720 / ABC1* (85/15) | 13 |
| 2 | KYNAR®720 / ABC1* (80/20) | 23 |
| 3 | KYNAR®720 / ABC1* (75/25) | 35 |
| 4** | PA12 | 473 |
| 5** | EVOH | 36 |

** Films témoins pour comparaison


Commentaires :

Le tube tricouche réalisé à partir de la formulation Témoin 1, dont la couche interne est en KYNAR®710 ne résiste pas au choc GM à - 40°C. En revanche, les tubes réalisés dans les mêmes conditions, à partir des mélanges contenant respectivement 15% et 25% de tribloc ABC1* résiste au test de choc GM à - 40°C. Cette résistance particulière ne peut être attribuée aux seuls diblocs PS-PB (BC1) présents dans le produit ABC1* comme le montre le résultat de choc réalisé sur le tube réalisé à partir du témoin2. Nous constatons donc que cette résistance particulière aux chocs est due à la présence des triblocs PMMA-PB-PS décrits précédemment.

Les essais réalisés en substituant le KYNAR®720 au KYNAR®710 illustrent le même résultat : le témoin 3 casse, les formulations 3 et 4 à base de tribloc ABC1* ne casse pas. De plus, des essais supplémentaires ont été réalisés en ajoutant au PVDF soit du Core shell seul (Témoin 4) soit du Core Shell et du plastifiant (Témoin 5). Ces additifs sont connus pour améliorer grandement la résistance aux chocs à basse température du PVDF. De façon surprenante, nous constatons que les structures réalisées à partir de ces deux témoins ne résistent pas au test de choc GM à - 40 C. De plus, l'addition de plastifiant n'est de toute façon pas souhaitable car le plastifiant est extrait par l'essence.

Le tube tricouche PA12 / liant1 / PA12 a un comportement très satisfaisant au choc GM à - 40°C, aucun des tubes ne casse. Il est en cela aussi satisfaisant que les formulations revendiquées dans la présente invention. Cependant, la couche interne (en contact avec l'essence) est dans ce cas en PA12, or ce polymère est beaucoup moins barrière à l'essence que les formulations revendiquées comme le démontre les résultats de perméabilité reportés dans le tableau III (le PA12 est de 15 à 30 fois plus perméables que les compositions revendiquées). De plus, un polyamide contient toujours des oligomères (et dans ce cas précis du plastifiant), ces produits sont extraits par l'essence. La structure multicouche présente donc des extractibles, ce qui n'est pas satisfaisant pour l'application.

Témoin 6 et formulations 5 et 6 : La viscosité de ces produits n'est pas adaptée à la coextrusion de tubes fins de diamètre extérieur 8mm et d'épaisseur 1 mm dans des conditions industrielles. En revanche, ce type de composition pourrait être utilisé pour réaliser des structures différentes et notamment des tubes plus gros ou plus épais.

Dans tous les cas, l'adhésion est parfaite entre la couche interne (formulation revendiquée dans la présente invention) et la couche de liant

Ces résultats démontrent qu'il est possible avec les formulations décrites dans l'invention de réalisée des structures multicouches (en particulier tricouche) qui résistent au test de choc GM213M à - 40°C, dont la couche en contact avec l'essence est très majoritairement constituée de PVDF, et qui conserve un excellent comportement barrière à l'essence.

Dans les exemples cités dans ce brevet les épaisseurs des différentes couches des tubes ont été maintenues constantes, ces épaisseurs peuvent varier. Pour préciser les caractéristiques des tubes tricouches qui peuvent être réalisés dans le cadre de cette invention, on peut citer les plages dans lesquelles les épaisseurs peuvent être choisies :

- Couche 1 en PVDF + tribloc : de 25 à 400 μm, de manière avantageuse entre 50 et 300μm et de préférence de 75 à 200 μm.
- Couche 2 de liant, couche assurant une excellente adhésion entre la couche 1 et la couche extérieure en PA : de 10 à 200 μm et de préférence de 25 à 100 μm.
- Couche 3 en PA : le complément pour obtenir l'épaisseur finale souhaitée de la paroi du tube.

La structure n'est pas forcément tricouche : elle peut avoir seulement 2 couches, l'adhésion entre les 2 couches étant assurée alors par l'addition d'un composé acrylique fonctionnel à la couche de PVDF + tribloc ou encore par en choisissant un tribloc ABC capable d'assurer une bonne adhésion sur polyamide.

Exemples de structure 2 couches, tubes dicouches :

a-

PA/ polymère fluoré + tribloc ABC + composé acrylique fonctionnel

b-

PA/ polymère fluoré + tribloc ABC + composé acrylique fonctionnel + noir de carbone électroconducteur.

Exemples de structure 3 couches, tubes tricouches :

a-

PA / liant/ polymère fluoré + tribloc ABC

b-

PA / liant / polymère fluoré + tribloc ABC + noir de carbone électroconducteur

Exemples de structure 4 couches, tubes quadricouches:

a- PA / liant / polymère fluoré / polymère fluoré + tribloc ABC + noir de carbone électroconducteur.
b- PA / liant / polymère fluoré + tribloc ABC / polymère fluoré + tribloc ABC + noir de carbone électroconducteur.

Eventuellement, la couche de liant peut également contenir des triblocs ABC.

**Revendications**

1. Tube ayant dans sa direction radiale, de l'intérieur vers l'extérieur, une couche dite intérieure, à base d'une résine (ou polymère) fluorée et destinée à entrer en contact avec un fluide circulant, **caractérisé en ce que** la couche intérieure est formée d'un mélange comportant une résine fluorée thermoplastique semi-cristalline et un copolymère tribloc ABC, les trois blocs A, B, et C étant reliés entre eux dans cet ordre, chaque bloc étant soit un homopolymère soit un copolymère obtenu à partir de deux ou plusieurs monomères, le bloc A étant relié au bloc B et le bloc B au bloc C au moyen d'une liaison covalente ou d'une molécule intermédiaire reliée à l'un de ces blocs par une liaison covalente et à l'autre bloc par une autre liaison covalente, et **en ce que** :

   - le bloc A est compatible avec la résine fluorée,
   - le bloc B est incompatible avec la résine fluorée et est incompatible avec le bloc A,
   - le bloc C est incompatible avec la résine fluorée, le bloc A et le bloc B.

2. Tube selon la revendication 1, **caractérisé en ce qu'**il est dicouche et comporte une couche extérieure en polyamide ou en un mélange de polyamide et de polyoléfine à matrice polyamide, la couche intérieure et la couche en polyamide ou à matrice polyamide étant solidaires.

3. Tube selon la revendication 1, **caractérisé en ce qu'**il est dicouche et comporte une couche extérieure en polyamide ou en un mélange de polyamide et de polyoléfine à matrice polyamide, la couche intérieure et la couche en polyamide ou à matrice polyamide étant rendues solidaires par l'ajout d'un composé acrylique fonctionnel au mélange de la couche intérieure.

4. Tube selon la revendication 1, **caractérisé en ce qu'**il est tricouche et comporte une couche extérieure en polyamide ou en un mélange de polyamide et de polyoléfine à matrice polyamide, la couche intérieure et la couche en polyamide ou à matrice polyamide étant rendues solidaires par un liant d'adhésion disposé entre elles.

5. Tube selon la revendication 1, **caractérisé en ce qu'**il est multicouche et comporte une couche en polyamide ou en un mélange de polyamide et de polyoléfine à matrice polyamide, la couche intérieure et la couche en polyamide ou à matrice polyamide étant rendues solidaires par une succession de couches intermédiaires qui, chacune, est solidaire de ses couches adjacentes.

6. Tube selon l'une des revendications 1 à 5, **caractérisé en ce que** le copolymère tribloc ABC contient, comme produits secondaires de sa synthèse, un copolymère dibloc B-C et éventuellement de l'homopolymère C.

7. Tube selon l'une des revendications 1 à 6, **caractérisé en ce que** le copolymère tribloc ABC contient, comme produits secondaires de sa synthèse, un copolymère dibloc A-B et éventuellement de l'homopolymère A.

8. Tube selon l'une des revendications 1 à 7, **caractérisé en ce que** le mélange de la couche intérieure contient une charge dispersée de noir de carbone électroconducteur en une quantité suffisante pour conférer à cette couche intérieure une conductivité surfacique inférieure ou égale à $10^9$ $\Omega$ et de préférence inférieure ou égale à $10^6$ $\Omega$.

9. Tube selon l'une des revendications 1 à 8, **caractérisé en ce que** le mélange de la résine fluorée thermoplastique semi-cristalline et du copolymère tribloc ABC avec éventuellement les produits secondaires de sa synthèse, contient en poids au moins 50 % et de préférence de 70 à 97 % de résine(s) fluorée(s) thermoplastique(s) semi-cristalline(s) et le complément (à 100 %) en poids du copolymère tribloc de masse moléculaire moyenne en nombre ($M_n$) supérieure ou égale à 20000 g.mol$^{-1}$, et de préférence comprise entre 50000 et 200000 g.mol$^{-1}$, avec éventuellement ses produits secondaires, constitué de :

- 20 à 93 et de préférence de 30 à 70 parties en poids de séquences A,
- 5 à 68 et de préférence de 10 à 40 parties en poids de séquences B,
- 2 à 65 et de préférence de 5 à 40 parties en poids de séquences C,

les pourcentages étant calculés par rapport au poids total de résine(s) fluorées(s) avec le copolymère à blocs et éventuellement ses produits secondaires, sans tenir compte dans ces pourcentages de la présence éventuelle d'autres additifs.

**10.** Tube selon l'une des revendications 1 à 9, **caractérisé en ce que** la résine fluorée est choisie parmi:

- les homo- et copolymères de fluorure de vinylidène (VF2) contenant de préférence au moins 50 % en poids de VF2 et au moins un autre monomère fluoré tel que le chlorotrifluoroéthylène (CTFE), l'hexafluoropropylène (HFP), le trifluoroéthylène (VF3), le tétrafluoroéthylène (TFE),
- les homo- et copolymères de trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

**11.** Tube selon la revendication 10, **caractérisé en ce que** la résine fluorée est du Poly(fluorure de vinylidène) (PVDF).

**12.** Tube selon l'une des revendications 1 à 11, **caractérisé en ce que** le bloc B a une température de transition vitreuse $Tg_{(B)}$, mesurée par analyse thermique différentielle, allant de -100°C à -50°C.

**13.** Tube selon l'une des revendications 1 à 12, **caractérisé en ce que** le bloc B est choisi parmi les poly(diènes) notamment poly(butadiène), poly(isoprène) et leurs copolymères statistiques, ou encore parmi les poly(diènes) notamment poly(butadiène), poly(isoprène) et leurs copolymères statistiques, partiellement ou totalement hydrogénés.

**14.** Tube selon l'une des revendications 1 à 13, **caractérisé en ce que** le bloc C a une température de transition vitreuse $Tg_{(C)}$ ou une température de fusion $Tf_{(C)}$ supérieure à la $Tg_{(B)}$ du bloc B.

**15.** Tube selon l'une des revendications 1 à 14, **caractérisé en ce que** le bloc A est choisi parmi les homo- et copolymères d'(alkyl)acrylate d'alkyle et par exemple de méthacrylate de méthyle (MAM) et/ou d'acrylate de méthyle ou d'éthyle et/ou celles dérivant d'acétate de vinyle.

**16.** Tube selon l'une des revendications 1 à 15, **caractérisé en ce que** le bloc A est du Poly(méthacrylate de méthyle (PMMA).

**17.** Tube selon la revendication 16, **caractérisé en ce que** le PMMA est syndiotactique et sa température de transition vitreuse $Tg_{(A)}$, mesurée par analyse thermique différentielle, est de + 120°C à + 140°C.

**18.** Tube selon l'une des revendications 1 à 17, **caractérisé en ce que** le tribloc ABC est du Poly (méthyle méthacrylate-*b*-butadiène-*b*-styrène).

**19.** Tube quadricouche selon l'une des revendications 1 à 18, **caractérisé par** la structure suivante :

PA / liant / polymère fluoré / polymère fluoré + tribloc ABC + noir de

carbone électroconducteur.

**20.** Tube quadricouche selon l'une des revendications 1 à 18, **caractérisé par** la structure suivante :

PA / liant / polymère fluoré + tribloc ABC / polymère fluoré + tribloc ABC + noir de carbone électroconducteur.

**Patentansprüche**

1. Rohrleitung, die in radialer Richtung von innen nach außen eine sogenannte Innenschicht auf der Basis eines fluorierten Harzes (oder Polymers) aufweist, die in Kontakt mit einer zirkulierenden Flüssigkeit kommen soll, **dadurch gekennzeichnet, daß** die Innenschicht aus einem Gemisch gebildet wird, das ein semikristallines thermoplastisches fluoriertes Harz und ein Dreiblock-Copolymer ABC enthält, wobei die drei Blöcke A, B und C in dieser Reihenfolge aneinander gebunden sind und wobei jeder Block entweder aus einem Homopolymer oder einem Copolymer besteht, das ausgehend von zwei oder mehreren Monomeren hergestellt wird, wobei der Block A an den Block B und der Block B an den Block C über eine kovalente Bindung oder ein intermediäres Molekül gebunden ist, welches an einen der Blöcke über eine kovalente Bindung und an den anderen Block über eine weitere kovalente Bindung gebunden ist, und dadurch, daß:

   - der Block A mit dem fluorierten Harz kompatibel ist,
   - der Block B mit dem fluorierten Harz inkompatibel ist und mit dem Block A inkompatibel ist, und
   - der Block C mit dem fluorierten Harz, dem Block A und dem Block B inkompatibel ist.

2. Rohrleitung nach Anspruch 1, **dadurch gekennzeichnet, daß** sie zweischichtig ist und eine äußere Schicht aus Polyamid oder einem Gemisch von Polyamid und Polyolefin mit Polyamidmatrix enthält, wobei die Innenschicht und die Schicht aus Polyamid oder mit Polyamidmatrix miteinander verbunden sind.

3. Rohrleitung nach Anspruch 1, **dadurch gekennzeichnet, daß** sie zweischichtig ist und eine äußere Schicht aus Polyamid oder ein Gemisch von Polyamid und Polyolefin mit Polyamidmatrix enthält, wobei die innere Schicht und die Schicht aus Polyamid oder mit Polyamidmatrix miteinander verbunden werden, indem eine funktionelle Acrylverbindung in das Gemisch der inneren Schicht eingearbeitet wird.

4. Rohrleitung nach Anspruch 1, **dadurch gekennzeichnet, daß** sie dreischichtig ist und eine äußere Schicht aus Polyamid oder einem Gemisch von Polyamid und Polyolefin mit Polyamidmatrix enthält, wobei die innere Schicht und die Schicht aus Polyamid oder mit Polyamidmatrix durch ein Haftbindemittel, das dazwischen angeordnet ist, miteinander verbunden werden.

5. Rohrleitung nach Anspruch 1, **dadurch gekennzeichnet, daß** sie mehrschichtig ist und eine Schicht aus Polyamid oder einem Gemisch von Polyamid und Polyolefin mit Polyamidmatrix enthält, wobei die innere Schicht und die Schicht aus Polyamid oder mit Polyamidmatrix durch aufeinanderfolgende Zwischenschichten miteinander verbunden werden, die jeweils mit den angrenzenden Schichten verbunden sind.

6. Rohrleitung nach einem der Ansprüche von 1 bis 5, **dadurch gekennzeichnet, daß** das Dreiblock-Copolymer ABC als Synthesenebenprodukte ein Zweiblock-Copolymer B-C und gegebenenfalls das Homopolymer C enthält.

7. Rohrleitung nach einem der Ansprüche 1 bis 6, **dadurch gekennzeichnet, daß** das Dreiblock-Copolymer ABC als Synthesenebenprodukte ein Zweiblock-Copolymer A-B und gegebenenfalls das Homopolymer A enthält.

8. Rohrleitung nach einem der Ansprüche 1 bis 7, **dadurch gekennzeichnet, daß** das Gemisch der inneren Schicht als dispergierten Füllstoff elektrisch leitenden Ruß in einer Menge enthält, die ausreichend ist, um der Innenschicht eine Oberflächenleitfähigkeit von höchstens $10^9$ Ω und vorzugsweise $10^6$ Ω oder darunter zu geben.

9. Rohrleitung nach einem der Ansprüche 1 bis 8, **dadurch gekennzeichnet, daß** das Gemisch von semikristallinem thermoplastischen fluorierten Harz und Dreiblock-Copolymer ABC gegebenenfalls mit seinen Synthesenebenprodukten mindestens 50 Gew.-% und vorzugsweise 70 bis 97 Gew.-% semikristalline(s) thermoplastische(s) fluorierte(s) Harz(e) und als Rest (100 Gew.-%) das Dreiblock-Copolymer mit einem Zahlenmittel des Molekulargewichts $M_n$ von 20 000 g·mol$^{-1}$ oder darüber und vorzugsweise im Bereich von 50 000 bis 200 000 g·mol$^{-1}$ gegebenenfalls einschließlich seiner Nebenprodukte enthält, das besteht aus:

- 20 bis 93 und vorzugsweise 30 bis 70 Gewichtsteilen Sequenzen A,
- 5 bis 68 und vorzugsweise 10 bis 40 Gewichtsteilen Sequenzen B,
- 2 bis 65 und vorzugsweise 5 bis 40 Gewichtsteilen Sequenzen C,

wobei die Prozentangaben auf das Gesamtgewicht des fluorierten Harzes (der fluorierten Harze) und des Blockcopolymers und gegebenenfalls seiner Nebenprodukte bezogen sind, ohne daß die Prozentanteile der gegebenenfalls vorliegenden weiteren Zusatzstoffe berücksichtigt sind.

10. Rohrleitung nach einem der Ansprüche 1 bis 9, **dadurch gekennzeichnet, daß** das fluorierte Harz ausgewählt ist unter:

- den Homopolymeren von Vinylidenfluorid (VF2) und den Copolymeren von Vinylidenfluorid (VF2), die vorzugsweise mindestens 50 Gew.-% VF2 und mindestens ein weiteres fluoriertes Monomer enthalten, wie Chlortrifluorethylen (CTFE), Hexafluorpropylen (HFP), Trifluorethylen (VF3) und Tetrafluorethylen (TFE),
- Homo- und Copolymeren von Trifluorethylen (VF3), und
- Copolymeren und insbesondere Terpolymeren, die Einheiten von Chlortrifluorethylen (CTFE), Tetrafluorethylen (TFE), Hexafluorpropylen (HFP) und/oder Ethylen und gegebenenfalls VF2-Einheiten und/oder VF3-Einheiten enthalten.

11. Rohrleitung nach Anspruch 10, **dadurch gekennzeichnet, daß** das fluorierte Harz das Poly(vinylidenfluorid) (PVDF) ist.

12. Rohrleitung nach einem der Ansprüche 1 bis 11, **dadurch gekennzeichnet, daß** der Block B eine mit Differenialthermoanalyse bestimmte Glasübergangstemperatur $Tg_{(B)}$ im Bereich von -100 bis -50 °C aufweist.

13. Rohrleitung nach einem der Ansprüche 1 bis 12, **dadurch gekennzeichnet, daß** der Block B unter den Polydienen und insbesondere Polybutadien, Polyisopren und deren statistischen Copolymeren, oder unter den Polydienen und insbesondere Polybutadien, Polyisopren und deren statistischen Copolymeren, die ganz oder teilweise hydriert sind, ausgewählt ist.

14. Rohrleitung nach einem der Ansprüche 1 bis 13, **dadurch gekennzeichnet, daß** der Block C eine Glasübergangstemperatur $Tg_{(C)}$ oder eine Schmelztemperatur $Tf_{(C)}$ über der $Tg_{(B)}$ des Blocks B aufweist.

15. Rohrleitung nach einem der Ansprüche 1 bis 14, **dadurch gekennzeichnet, daß** der Block A unter den Homo- und Copolymeren von Alkyl(alkyl)acrylaten und beispielsweise Methylmethacrylat (MAM) und/oder Methylacrylat oder Ethylacrylat und/oder von Vinylacetat abgeleiteten Homo- und Copolymeren ausgewählt ist.

16. Rohrleitung nach einem der Ansprüche 1 bis 15, **dadurch gekennzeichnet, daß** der Block A aus Poly(methylmethacrylat) (PMMA) besteht.

17. Rohrleitung nach Anspruch 16, **dadurch gekennzeichnet, daß** das PMMA syndiotaktisch ist und seine mit Differentialthermoanalyse bestimmte Glasübergangstemperatur $Tg_{(A)}$ im Bereich von 120 bis 140 °C liegt.

18. Rohrleitung nach einem der Ansprüche 1 bis 17, **dadurch gekennzeichnet, daß** das Dreiblock-Polymer ABC aus Poly(methylmethacrylat-*b*-butadien-*b*-styrol) besteht.

19. Vierschichtige Rohrleitung nach einem der Ansprüche 1 bis 18, **gekennzeichnet durch** die folgende Struktur:

PA/Bindemittel/fluoriertes Polymer/fluoriertes Polymer + Dreiblock ABC + elektrisch leitender Ruß.

20. Vierschichtige Rohrleitung nach einem der Ansprüche 1 bis 18, **gekennzeichnet durch** die folgende Struktur:

PA/Bindemittel/fluoriertes Polymer + Dreiblock ABC/fluoriertes

Polymer + Dreiblock ABC + elektrisch leitender Ruß.

**Claims**

1. Tube having in its radial direction, from the inside to the outside, a so-called inner layer based on a fluororesin (or fluoropolymer) and intended to come into contact with a flowing fluid, **characterized in that** the inner layer is formed from a blend comprising a semicrystalline thermoplastic fluororesin and an ABC triblock copolymer, the three blocks A, B and C being linked together in this order, each block being either a homopolymer or a copolymer obtained from two or more monomers, the A block being linked to the B block and the B block to the C block by means of a covalent bond or of an intermediate molecule linked to one of these blocks via a covalent bond and to the other block via another covalent bond, and **in that**:

   - the A block is compatible with the fluororesin,
   - the B block is incompatible with the fluororesin and is incompatible with the A block, and
   - the C block is incompatible with the fluororesin, the A block and the B block.

2. Tube according to Claim 1, **characterized in that** it is a bilayer and comprises an outer layer made of polyamide or of a polyamide/polyolefin blend having a polyamide matrix, the inner layer and the polyamide or polyamide-matrix layer being fastened together.

3. Tube according to Claim 1, **characterized in that** it is a bilayer and comprises an outer layer made of polyamide or of a polyamide/polyolefin blend having a polyamide matrix, the inner layer and the polyamide or polyamide-matrix layer being fastened together by the addition of a functional acrylic compound to the blend of the inner layer.

4. Tube according to Claim 1, **characterized in that** it is a trilayer and comprises an outer layer made of polyamide or of a polyamide/polyolefin blend having a polyamide matrix, the inner layer and the polyamide or polyamide-matrix layer being fastened together by an adhesion binder placed between them.

5. Tube according to Claim 1, **characterized in that** it is a multilayer and comprises a layer made of polyamide or of a polyamide/polyolefin blend having a polyamide matrix, the inner layer and the polyamide or polyamide-matrix layer being fastened together by a succession of intermediate layers, each of which is fastened to its adjacent layers.

6. Tube according to one of Claims 1 to 5, **characterized in that** the ABC triblock copolymer contains, as by-products of its synthesis, a BC diblock copolymer and possibly C homopolymer.

7. Tube according to one of Claims 1 to 6, **characterized in that** the ABC triblock copolymer contains, as by-products of its synthesis, an AB diblock copolymer and possibly some A homopolymer.

8. Tube according to one of Claims 1 to 7, **characterized in that** the blend of the inner layer contains a dispersed electrically conductive carbon black filler in an amount sufficient to give this inner layer a surface resistivity of less than or equal to $10^9$ $\Omega/\square$ and preferably less than or equal to $10^6$ $\Omega/\square$.

9. Tube according to one of Claims 1 to 8, **characterized in that** the blend of the semicrystalline thermoplastic fluororesin and the ABC triblock copolymer, possibly with the by-products of its synthesis, contains at least 50% and preferably from 70 to 97% by weight of semicrystalline thermoplastic fluororesin(s) and the balance (to 100%) by weight of the triblock copolymer of number-average molecular mass ($M_n$) greater than or equal to 20,000 g. $\text{mol}^{-1}$ and preferably between 50,000 and 200,000 $\text{g.mol}^{-1}$, possibly with its by-products, consisting of:

   - 20 to 93 and preferably 30 to 70 parts by weight of A sequences,
   - 5 to 68 and preferably 10 to 40 parts by weight of B sequences,
   - 2 to 65 and preferably 5 to 40 parts by weight of C sequences,

   the percentages being calculated with respect to the total weight of fluororesin(s) with the block copolymer and possibly its by-products, without taking into account in these percentages the optional presence of other additives.

**10.** Tube according to one of Claims 1 to 9, **characterized in that** the fluororesin is chosen from:

- homopolymers and copolymers of vinylidene fluoride (VF2) preferably containing at least 50% by weight of VF2 and at least one other fluoromonomer, such as chlorotrifluoroethylene (CTFE), hexafluoropropylene (HFP), trifluoroethylene (VF3) and tetrafluoroethylene (TFE);
- homopolymers and copolymers of trifluoroethylene (VF3);
- copolymers, and especially terpolymers, combining the residues of chlorotrifluoroethylene (CTFE), tetrafluoroethylene (TFE) or hexafluoropropylene (HFP) units and/or ethylene and possibly VF2 and/or VF3 units.

**11.** Tube according to Claim 10, **characterized in that** the fluororesin is poly(vinylidene fluoride) (PVDF).

**12.** Tube according to one of Claims 1 to 11, **characterized in that** the B block has a glass transition temperature $T_{g(B)}$, measured by differential thermal analysis, ranging from -100°C to -50°C.

**13.** Tube according to one of Claims 1 to 12, **characterized in that** the B block is chosen from polydienes, especially polybutadiene, polyisoprene and their random copolymers, or else from polydienes, especially polybutadiene, polyisoprene and their random copolymers, that are partially or completely hydrogenated.

**14.** Tube according to one of Claims 1 to 13, **characterized in that** the C block has a glass transition temperature $T_{g(C)}$ or a melting point $T_{m(C)}$ greater than the $T_{g(B)}$ of the B block.

**15.** Tube according to one of Claims 1 to 14, **characterized in that** the A block is chosen from homopolymers and copolymers of alkyl (alkyl)acrylates, for example methyl methacrylate (MMA) and/or methyl or ethyl acrylate and/or those deriving from vinyl acetate.

**16.** Tube according to one of Claims 1 to 15, **characterized in that** the A block is poly(methyl methacrylate) (PMMA).

**17.** Tube according to Claim 16, **characterized in that** the PMMA is syndiotactic and its glass transition temperature $T_{g(A)}$, measured by differential thermal analysis, is from + 120°C to + 140°C.

**18.** Tube according to one of Claims 1 to 17, **characterized in that** the ABC triblock is poly(methyl methacrylate-*b*-butadiene-*b*-styrene).

**19.** Quadrilayer tube according to one of Claims I to 18, **characterized by** the following structure:

PA/binder/fluoropolymer/fluoropolymer + ABC triblock + electrically

conductive carbon black.

**20.** Quadrilayer tube according to one of Claims 1 to 18, **characterized by** the following structure:

PA/binder/fluoropolymer + ABC triblock/fluoropolymer + ABC

triblock + electrically conductive carbon black.